Europäisches Patentamt

European Patent Office

Office européen des brevets

(19)

(11) Numéro de publication : **0 435 719 B1**

(12)                        **FASCICULE DE BREVET EUROPEEN**

(45) Date de publication du fascicule du brevet :
13.10.93 Bulletin 93/41

(51) Int. Cl.⁵ : **E06B 9/68**

(21) Numéro de dépôt : **90403497.2**

(22) Date de dépôt : **07.12.90**

(54) **Perfectionnements apportés aux volets roulants motorisés.**

(30) Priorité : **26.12.89 FR 8917189**

(43) Date de publication de la demande :
**03.07.91 Bulletin 91/27**

(45) Mention de la délivrance du brevet :
**13.10.93 Bulletin 93/41**

(84) Etats contractants désignés :
**AT BE CH DE DK ES FR GB GR IT LI LU NL SE**

(56) Documents cités :
**DE-A- 1 509 753
FR-A- 2 557 397**

(73) Titulaire : **ZURFLUH-FELLER S.A.
Roide
F-25150 Pont de Roide (FR)**

(72) Inventeur : **Feller, Marc
Rue du Landry
F-25150 Autechaux Roide (FR)**

(74) Mandataire : **Armengaud Ainé, Alain
Cabinet ARMENGAUD AINE 3 Avenue
Bugeaud
F-75116 Paris (FR)**

## Description

La présente invention est relative à des perfectionnements apportés aux volets roulants motorisés.

On sait qu'un volet roulant de type classique entraîné par un moteur est généralement constitué d'un tablier ou rideau, d'un axe sur lequel s'enroule ledit rideau, d'un système d'entraînement constitué par un moto-réducteur du type dit tubulaire logé dans ledit axe d'enroulement et d'un dispositif de commande destiné à assurer les déplacements du volet.

L'arrêt du tablier du volet en position supérieure et/ou en position inférieure est à l'heure actuelle obtenu à l'aide d'un dispositif du type fin de course, qui est intégré au moto-réducteur d'entraînement et qui commande l'arrêt en position haute ou basse du volet, d'après la position angulaire de l'axe d'enroulement dudit volet.

Les inconvénients de ce type de matériel actuellement réalisé sont relativement nombreux et on peut citer notamment les suivants:
- il est nécessaire de prévoir un réglage du dispositif de fin de course haute et basse du volet lors de la mise en service du volet de ce dernier ;
- il est nécessaire de refaire ce réglage lorsque les positions d'arrêts de fin de course ne conviennent plus;
- la position angulaire de l'axe d'enroulement du volet ne donne aucune certitude sur la position de celui-ci notamment lors d'un mauvais attelage du volet roulant sur son axe d'enroulement, en cas d'usure, de dilatation, de blocage etc...;
- aucun dispositif de sécurité n'est prévu pour détecter un obstacle sur la trajectoire du volet lorsque ce dernier est en mouvement
- ce qui se traduit par des risques d'accidents corporels ou de détérioration du matériel ;
- auncun système de commande de l'arrêt du moto-réducteur n'est prévu en cas de blocage du volet ;
- il n'est pas prévu de moyens permettant de signaler les effractions éventuelles sur le volet, étant donné que ces systèmes connus ne prévoient aucune émission de signal d'effraction permettant de donner l'alarme.

Il existe cependant un brevet FR-A 2557397 qui vise un volet roulant motorisé qui comporte un tablier ou rideau, un axe d'enroulement pour ce tablier, un moto-réducteur, un dispositif de commnande de ce moto-réducteur muni d'un dispositif d'asservissement de position et de déplacement dudit tablier, ledit dispositif d'asservissement reçoit des informations émises par des moyens de codage qui agissent sur la commande du moto-réducteur d'entraînement du volet.

La présente invention se propose donc d'apporter des perfectionnements à des volets roulants motorisés permettant notamment :
- d'assurer, de façon totalement automatique et sans réglage préalable, les arrêts de fin de course du volet ;
- de garantir la sécurité des personnes et du matériel grâce à des moyens assurant la détection d'un blocage éventuel du tablier du volet sur sa trajectoire de déplacement et le traitement des signaux issus de cette détection ;
- de détecter les tentatives d'effractions sur le volet et, à partir de cette détection, générer un signal d'alarme.

En conséquence, cette invention concerne des perfectionnements apportés à un volet roulant motorisé du type comportant un tablier ou rideau, un axe d'enroulement pour ce tablier, un motoréducteur d'entraînement du type tubulaire logé dans ledit axe et un dispositif de commande de ce moto-réducteur qui comprend un dispositif de contrôle de la position et du déplacement du volet roulant, des moyens de codage entraînés par lesdits moyens de contrôle, un système de captage des informations transmises par lesdits moyens de codage et délivrant des signaux de déplacement et de position dudit tablier et un circuit électronique de traitement desdits signaux qui agit sur la commande du moto-réducteur d'entraînement du volet pour immobiliser ce dernier dans toute position voulue ou pour délivrer un signal tel que notamment un signal d'alarme, caractérisé en ce que le dispositif de contrôle de la position et du déplacement du volet roulant comprend des moyens qui assure la détection du mouvement de translation linéaire du tablier du volet roulant qui sont constitués par un galet de friction venant prendre appui sur la surface dudit tablier et transformant le mouvement de déplacement linéaire du volet en un mouvement de rotation.

Les moyens de codage sont réalisés sous la forme d'une roue codeuse, pourvue d'un certain nombre d'encoches périphériques et radiales, qui est solidaire dudit galet de friction et entraînée par ce dernier et le système de captage des informations délivrées par la roue codeuse est réalisé sous la forme d'un capteur optoélectronique qui détecte le passage des encoches de ladite roue codeuse et qui délivre un signal électrique correspondant qui est traité par ledit circuit électronique.

Selon un mode de réalisation préféré des perfectionnements objets de cette invention, on prévoit en outre un capteur de présence du rideau ou tablier du volet pour détecter l'arrivée en position haute dudit volet, ce

2

capteur pouvant être réalisé sous la forme d'un galet, rappelé par ressort, prenant appui sur la surface du volet et échappant à cette surface en fin de course haute du volet pour actionner un micro-contact commandant l'arrêt du moto-réducteur d'entraînement du volet.

Selon l'invention, le dispositif de contrôle de la position et du mouvement du volet roulant est monté sur un support oscillant articulé sur un axe et muni d'un ressort de rappel, l'ensemble ainsi constitué étant fixé sur le rail de guidage latéral du tablier, en haut de ce rail, de manière que les moyens assurant la détection du mouvement de translation du volet, réalisés par exemple par ledit galet de friction, soient en appui de façon permanente sur la surface du tablier dudit volet.

Selon l'invention, on peut prévoir un seul système de contrôle de la position et du mouvement du volet, positionné sur l'un quelconque des rails latéraux assurant le guidage du tablier, ou, selon une variante, on prévoit deux desdits systèmes chacun de ces derniers étant positionné sur un rail latéral de guidage.

D'autres caractéristiques et avantages de la présente invention ressortiront de la description faite ci-après en référence aux dessins annexés qui en illustrent un exemple de réalisation dépourvu de tout caractère limitatif. Sur les dessins:

- la figure 1 est une vue en coupe transversale du dispositif selon la présente invention;
- la figure 2 est une coupe selon 2-2 de la figure 1 ;
- la figure 3 est une vue en plan de la figure 1 et ;
- la figure 4 est un bloc diagramme représentant le circuit électronique du dispositif selon l'invention.

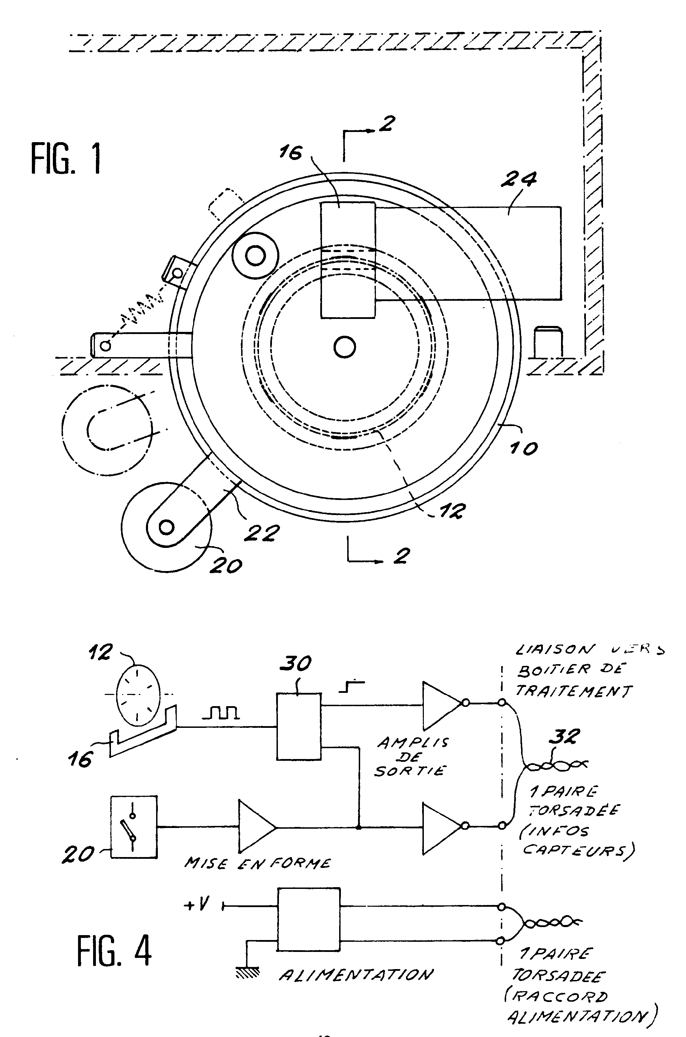

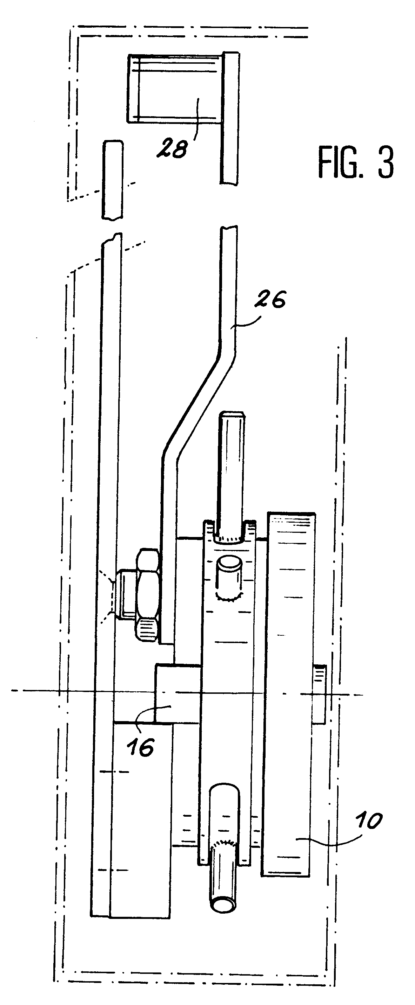

En se référant aux figures 1 à 3, on voit que le dispositif selon cette invention, destiné à assurer le contrôle de position et de mouvement du volet roulant comprend essentiellement :

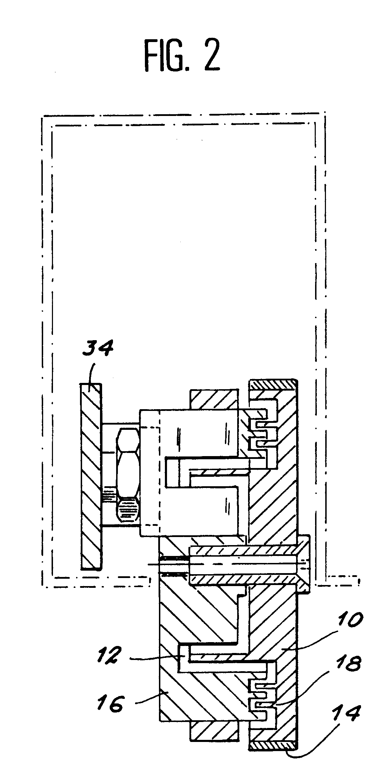

- des moyens permettant de détecter les mouvements linéaires de ce volet roulant. Dans cet exemple de réalisation, ces moyens sont constitués par un galet 10, pourvu éventuellement d'un revêtement de friction 14, qui prend appui sur la surface du tablier de ce volet de manière à transformer les déplacements linéaires du volet en un mouvement de rotation ;
- des moyens de codage de la position et du déplacement dudit volet qui dans cet exemple de réalisation sont réalisés sous la forme d'une roue codeuse 12 qui est solidaire du galet de friction 10 et qui est entraînée en rotation avec ce dernier, cette roue codeuse étant munie d'un certain nombre d'encoches périphériques et radiales ;
- un système de captage de la position et du déplacement du volet obtenus à partir des moyens de codage, ce système de captage dans le présent exemple de réalisation, étant réalisé sous la forme d'un capteur optoélectronique 16, associé à la roue codeuse 12, alimenté en basse tension et délivrant les signaux à traiter, donnant des informations sur la position et le déplacement du volet, en détectant le passage des encoches de cette roue codeuse et en délivrant des signaux électriques correspondants. Comme on peut le voir sur la figure 2, l'étanchéité notamment aux poussières du système roue codeuse 12 - capteur optoélectronique 16 est assurée par un montage à chicanes désigné par la référence 18 et ;
- un circuit électronique de traitement des signaux 34 (figure 2) représenté sur la figure 4 sous la forme d'un bloc diagramme.

Dans cet exemple de réalisation non limitatif, le dispositif comporte en outre des moyens permettant de détecter l'arrivée et la présence en position haute du tablier du volet. Ces moyens sont réalisés ici sous la forme d'un capteur de présence du tablier constitué par un galet 20 venant appuyer sur la surface du tablier, ce galet étant monté à l'extrémité d'un bras 22 rappelé par un ressort. Le déplacement de ce galet, lorsque le tablier arrive en position haute, actionne un micro-commutateur 24 qui déclenche l'arrêt du moto-réducteur d'entraînement du volet.

Le dispositif selon l'invention est monté sur un support oscillant 26 articulé sur un axe 28 et pourvu d'un système de ressort de rappel. Ce dispositif est positionné sur l'une des coulisses latérales du volet roulant, c'est-à-dire sur l'un des rails de guidage latéral du tablier, de manière que le galet de friction 10 soit maintenu en appui de façon permanente sur le tablier du volet. Par ailleurs, le dispositif est monté à la partie supérieure de ce rail latéral de manière que le capteur de présence du tablier constitué par le galet 20 assure un arrêt correct en position haute du tablier.

Ce type de montage sur support oscillant permet de régler la position du capteur en fonction des différents types de volets et notamment de leurs rails de guidage latéral.

On se réfère maintenant à la figure 4 qui illustre le bloc diagramme du circuit électronique 34 de traitement des informations. Sur cette figure on retrouve sous forme schématisée la roue codeuse 12 solidaire du galet de friction entraînée en rotation par le volet, le capteur optoélectronique 16 et le capteur de présence du tablier 20. Ce circuit comprend un monostable 30 qui traite les signaux sortant du capteur 16 en les mettant en forme à l'aide d'un circuit de déclenchement bistable (trigger) et qui génère un signal logique tout ou rien de mise en mouvement ou d'arrêt du volet. Les signaux de sortie, après amplification sont transmis vers le boîtier de traitement des informations à l'aide d'une ligne filaire ou paire torsadée 32 pouvant prendre deux états :

- courant selon un premier sens : volet en mouvement (courant de boucle i1) ;
- courant en sens inverse : ordre d'arrêt par le micro-commutateur 24 commandé par le capteur de présence de tablier en fin de course 20 (courant de boucle i2).

Cette technique permet de transmettre deux informations sur une même ligne qui est totalement isolée du boîtier de traitement.

Ce boîtier de traitement (non représenté) assure notamment les fonctions suivantes :

- le discernement des courants de boucle i1/i2, afin de traiter les ordres "mouvement volet" et "arrêt du volet" ;
- l'action directe de l'ordre d'arrêt sur un relais "montée" et ;
- l'implantation d'une protection contre les surtensions, sur les entrées alimentation du système, commande "montée/descente", commande arrêt/mouvement du volet.

Le fonctionnement du dispositif décrit ci-dessus est le suivant :

- le tablier du volet roulant, lors de son déplacement provoque la rotation du galet 10 qui appuie sur ce tablier. Le support pivotant 26 sur lequel est monté l'ensemble du dispositif objet de l'invention assure un contact permanent de ce galet de friction sur le tablier du volet, en particulier lors du passage d'une lame de tablier à la suivante ;
- le galet de friction 10 entraîne la roue codeuse 12, cette dernière étant pourvue d'un certain nombre d'encoches périphériques et radiales, le capteur optoélectronique 16 détecte le passage de ces encoches et il fournit un signal électrique correspondant qui est traité par le circuit électronique représenté sur la figure 4.

La précision avec laquelle on veut connaître le déplacement du tablier du volet est fonction du diamètre du galet de friction 10, du rapport de transmission entre ce galet de friction 10 et la roue codeuse à encoches 12 entraînée par ce galet, du diamètre de cette roue codeuse 12 et du nombre d'encoches périphériques et radiales dont est pourvue cette roue codeuse.

Le signal qui est issu du capteur optoélectronique 16 est transformé par le monostable 30 du circuit électronique de traitement en un signal stable dont la durée est liée à la durée de déplacement du volet.

L'absence de ce signal signifie une immobilisation du tablier et elle déclenche un arrêt du moto-réducteur d'entraînement du volet par l'intermédiaire du boîtier de traitement.

Le galet 20, constituant le capteur de la présence du tablier du volet, lorsqu'il n'est plus en appui sur ce tablier fournit une information qui est transmise au micro-interrupteur de fin de course 24 de manière à immobiliser le volet en position haute.

Le dispositif selon la présente invention peut être appliqué à tout organe mobile de fermeture ou d'obturation autre qu'un volet roulant. Cette application peut être envisagée dans le cas où l'on veut réaliser un système de détection de fin de course, d'arrêt de déplacement d'un organe mobile d'obturation en cas d'obstacle sur la trajectoire de ce dernier et la mise en action d'un signal d'alarme en cas d'intervention non autorisée (par exemple en cas d'effraction) sur cet organe mobile d'obturation.

Par ailleurs, le dispositif selon la présente invention permet également d'utiliser directement les impulsions provenant du capteur 16 pour exploiter les informations délivrées par ce capteur et pour assurer la gestion complète des mouvements du volet (notamment contrôle de positiion...). Ce dispositif permet donc de régler la position du volet en fonction de divers facteurs préétablis (par exemple ensoleillement...), ce qui permet de l'appliquer à la réalisation de volet de serre, de véranda etc..., la gestion totale de la position du volet étant réalisée à l'aide d'un élément "intelligent" de gestion qui reçoit les informations du capteur.

Ainsi qu'on l'a déjà précisé ci-dessus, le dispositif selon l'invention peut être monté sur l'un ou l'autre des rails de guidage latéral du tablier du volet roulant ou bien encore il est possible de prévoir deux dispositifs identiques montés respectivement sur chacun de ces rails latéraux. Cette variante pouvant être particulièrement intéressante pour des applications du dispositif selon l'invention à des volets roulants, ou à des éléments d'obturation de type similaire de grande largeur.

On a donné ci-après à titre d'exemple non limitatif un organigramme fonctionnel du logiciel de commande du volet roulant par le dispositif selon l'invention décrit ci-dessous.

**ORGANIGRAMME**

```
                              ---------------
                              !   début      !
                              ---------------
                                     !
                         ----------------------------
                         ! Initalisation des        !
                         ! entrées/sorties, des     !
                         ! variables et du timer    !
                         ----------------------------
                                     !<-----------------o---------------o
                         --------------------  non  !                   !
                         < attente fin timing >------!                  !
                         --------------------                           !
                                     ! oui                              !
                         ----------------------------                   !
                         ! démarrage nouveau timing !                   !
                         ----------------------------                   !
                                     !                                  !
                 non     ----------------------------------             !
          -------------< test touche descente active >                  !
          !              ----------------------------------             !
          !                          ! oui                              !
 ---------------        ----------------------------------              !
 ! raz comptage !       ! incrémentation comptage         !            !
 ! descente     !       ! durée appui touche descente     !            !
 ---------------        ----------------------------------              !
          !                          !                                  !
          ------------------------->!                                   !
                 non     ----------------------------------             !
          -------------< test touche montée    active >                 !
          !              ----------------------------------             !
          !                          ! oui                              !
 ---------------        ----------------------------------              !
 ! raz comptage !       ! incrémentation comptage         !            !
 ! montee       !       ! durée appui touche montée       !            !
 ---------------        ----------------------------------              !
          !                          !                                  !
          ------------------------->!                                   !
          oui            ----------------------------------             !
 ---------------------< test commandes verrouillées >                   !
 !                      ----------------------------------              !
 !                                   ! non                              !
 !               non     ----------------------------------             !
 !        -------------< test volet en mouvement      >                 !
 !        !              ----------------------------------             !
 !        !                          ! oui                              !
 !        !     oui     ----------------------------------              !
 !<-----------------< test commande volet active   >                    !
 !        !              ----------------------------------             !
 !        !                          ! non                              !
 !        !                          !                                  !
```

```
                              -------------------------------
                              ! alarme volet active        !
                              -------------------------------
        ---------------------->!
                    oui   -------------------------------
        ---------------------< test capteur position haut >
                              -------------------------------
                                        ! non
                    oui   -------------------------------
        ---------------------< test commande volet active >
                              -------------------------------
                                        ! non
                    oui   -------------------------------
            -------------< comptage montée = consigneM >
                              -------------------------------
                                        ! non
                    oui   -------------------------------
            ---------< comptage desc. = consigne D >
                              -------------------------------
                                        ! non
                  oui -------------------------------
            ---< comptage mont/desc = verrou >
                              -------------------------------
                                        ! non
                                        -------------------------------->!

            -------------------
                                        !
                              -------------------------------
                              ! verrouillage des commandes  !
                              ! du volet                     !
                              -------------------------------
                                        !
                                        -------------------------------->!

            --------------------
                                        !
                              ------------------------- non
                              < volet déjà initialisé    >------------------->!
                              -------------------------
                                        ! oui
                              -------------------------------
                              ! démarrage descente volet   !
                              ! commande active            !
                              ! alarme volet inactive       !
                              ! tempo d'attente             !
                              -------------------------------
                                        !
                                        -------------------------------->!
```

```
                    -------------------------------!
                                                                 oui
                        ------------------------------   >----------------->!
                        <  capteur position haute     >
                        ------------------------------
                                          ! non
                        ------------------------------
                        ! démarrage montée    volet   !
                        ! commande volet active       !
                        ! alarme volet inactive       !
                        ! tempo d'attente             !
                        ------------------------------
                                          !
                                          ------------------------------------->!

                    ------------------------------
                                          !
                    non   ------------------------------
                    ------<  comptage mont/desc = arrêt  >
                          ------------------------------
                                          ! oui
                                          ------------------------------
                                          ! arrêt volet                !
                                          ! commande inactive          !
                                          ------------------------------
                                          !
                                          ------------------------------------->!

                    ------------------------------
                                          !
                        ------------------------------   oui
                        <  test volet en mouvement     >  --------------->!
                        ------------------------------
                                          ! non
                        ------------------------------
                        ! arrêt volet                 !
                        ------------------------------
                                          !
                                          ------------------------------------->!
                ------------------------------
                                          !
                        ------------------------------
                        ! arrêt volet                 !
                        ! marquage initialisation     !
                        ! volet                       !
                        ! commande inactive           !
                        ------------------------------
                                          !
                                          ------------------------------------->!
```

```
                                                     non        --------------------------------
                                              ---------------< test volet en mouvement        >
                                              !                 --------------------------------
                                              !                                ! oui
                                              !                 --------------------------------
                                              !                 ! alarme volet active          !
                                              !                 --------------------------------
                                              !                                !
                                              !                                     ------------------------------->
                                              !
                                              --------------------------------
                                                                               !
                                              --------------------------------------        non
                                              < compteur mont/desc = déverrou        >-------------->
                                              --------------------------------------
                                                                               ! oui
                                              --------------------------------------
                                              ! déverrouillage des commandes         !
                                              --------------------------------------
                                                                               !
                                                                                    ------------------------------->
```

## Revendications

**1.** Volet roulant motorisé perfectionné du type comportant un tablier ou rideau, un axe d'enroulement pour ce tablier, un motoréducteur d'entraînement du type tubulaire logé dans ledit axe et un dispositif de commande de ce moto-réducteur qui comprend un dispositif de contrôle de la position et du déplacement du volet roulant, des moyens de codage (12) entraînés par lesdits moyens de contrôle, un système de captage (16) des informations transmises par lesdits moyens de codage et délivrant des signaux de déplacement et de position dudit tablier et un circuit électronique (34) de traitement desdits signaux qui agit sur la commande du moto-réducteur d'entraînement du volet pour immobiliser ce dernier dans toute position voulue ou pour délivrer un signal tel que notamment un signal d'alarme, caractérisé en ce que le dispositif de contrôle de la position et du déplacement du volet roulant comprend des moyens qui assure la détection du mouvement de translation linéaire du tablier du volet roulant qui sont constitués par un galet de friction (10) venant prendre appui sur la surface dudit tablier et transformant le mouvement de déplacement linéaire du volet en un mouvement de rotation.

**2.** Volet roulant selon la revendication 1 caractérisé en ce que les moyens de codage sont réalisés sous la forme d'une roue codeuse (12), pourvue d'un certain nombre d'encoches périphériques et radiales, qui est solidaire dudit galet de friction (10) et qui est entraînée par ce dernier.

**3.** Volet roulant selon l'une quelconque des revendications précédentes, caractérisé en ce que le système de captage des informations délivrées par lesdits moyens de codage (12) est réalisé sous la forme d'un capteur optoélectronique (16) qui détecte le passage des encoches de ladite roue codeuse et qui fournit un signal électrique correspondant qui est traité par ledit circuit électronique (34).

**4.** Volet roulant selon l'une quelconque des revendications précédentes, caractérisé en ce qu'il comporte en outre un capteur (22) de la présence du tablier du volet afin de détecter l'arrivée de ce dernier en position haute et provoquer l'arrêt dudit moto-réducteur d'entraînement.

**5.** Volet roulant selon la revendication 4, caractérisé en ce que ledit capteur de présence du tablier est constitué par un galet (20) monté à l'extrémité d'un bras (22) rappelé par un ressort et prenant appui sur la surface dudit tablier, le déplacement de ce galet, lorsque le tablier arrive en position haute actionnant un micro-commutateur (24) qui déclenche l'arrêt dudit moto-réducteur d'entraînement.

6. Volet roulant selon l'une quelconque des revendications précédentes, caractérisé en ce que le dispositif de contrôle de la position et du mouvement du volet roulant est monté sur un support oscillant (26) articulé sur un axe (28) et muni d'un ressort de rappel, l'ensemble ainsi constitué étant fixé sur l'un des rails de guidage latéral du tablier du volet, en haut de ce rail de manière que les moyens (10) assurant la détection du mouvement de translation du volet, soient en appui permanent sur le tablier dudit volet.

7. Volet roulant selon l'une quelconque des revendications précédentes, caractérisé en ce que ledit circuit électronique de traitement des informations délivrées par le capteur (16) et le capteur de présence du tablier (20) comprend notamment un monostable (30) qui traite les signaux sortant dudit capteur de position (16) et dudit capteur de présence du tablier (20) et les mettant en forme à l'aide d'un circuit de déclenchement bistable et qui génère un signal logique tout ou rien de mise en mouvement ou d'arrêt du volet, les signaux de sortie étant transmis vers un boitier de traitement des informations par l'intermédiaire d'une ligne filaire ou paire torsadée (32) pouvant prendre deux états :
   - courant selon un premier sens : volet en mouvement ;
   - courant en sens inverse : ordre d'arrêt par le micro-commutateur (24) commandé par le capteur de présence de tablier (20) en fin de course.

8. Volet roulant selon l'une quelconque des revendications précédentes, caractérisé en ce qu'il comporte deux dispositifs de contrôle de la position et du mouvement du tablier du volet, chacun de ces dispositifs étant monté respectivement sur un rail de guidage latéral dudit tablier.

## Patentansprüche

1. Verbesserter motorbetriebener Rolladen mit einer Schürze oder einem Vorhang, einer Wickelachse für diesen Vorhang, einem rohrförmigen in der Wickelachse untergebrachten Antriebsgetriebemotor und einer Vorrichtung zur Steuerung des Antriebsgetriebemotors, wobei die Steuervorrichtung eine Vorrichtung zur Steuerung der Lage und Stellung des Rolladens, durch die Mittel zur Steuerung angetriebene Mittel zur Kodierung (12), ein System (16) zur Aufnahme von durch die Mittel zur Kodierung übertragenen Informationen und zur Lieferung von Signalen der Verschiebung und der Lage des Vorhangs und einen elektronischen Schaltkreis (34) zur Verarbeitung der Signale aufweist, der durch den Antriebsgetriebemotor des Rolladens gesteuert wird, um diesen an jeder beliebigen Stelle anzuhalten oder um ein Signal, insbesondere ein Alarmsignal, zu liefern,
   dadurch **gekennzeichnet,**
   daß die Vorrichtung zur Steuerung der Stellung und Lage des Rolladens Mittel zur sicheren Erfassung der linearen Verschiebebewegung des Vorhangs des Rolladens aufweist, die aus einer Reibrolle (10) bestehen, die auf der Oberfläche des Vorhangs zur Anlage kommt und die lineare Verschiebebewegung des Rolladens in eine Rotationsbewegung umsetzt.

2. Rolladen nach Anspruch 1,
   dadurch **gekennzeichnet,**
   daß die Mittel zur Kodierung aus einem mit einer bestimmten Zahl von peripheren und radialen Kerben bzw. Rasten versehenen Kodierrad (12) bestehen, das mit dem Reibrad (10) fest verbunden ist und von diesem mitgenommen wird.

3. Rolladen nach einem der vorhergehenden Ansprüche,
   dadurch **gekennzeichnet,**
   daß das System zur Aufnahme der von den Mitteln zur Kodierung (12) übertragenen Informationen aus einem optoelektronischen Aufnehmer (16) besteht, der den Durchlauf der Kerben des Kodierrades erfaßt und ein entsprechendes elektronisches Signal erzeugt, das vom elektronischen Schaltkreis verarbeitet wird.

4. Rolladen nach einem der vorhergehenden Ansprüche,
   **gekennzeichnet** durch
   einen weiteren Aufnehmer (22) für das Vorhandensein des Vorhangs des Rolladens aufweist, um dessen Ankunft in der oberen Endstellung zu erfassen und das Anhalten des Antriebsgetriebemotors zu veranlassen.

5. Rolladen nach Anspruch 4,
dadurch **gekennzeichnet,**
daß der Aufnehmer für das Vorhandensein des Vorhangs aus einer am Ende eines Armes (22) montierten und mit einer Rückholfeder versehenen Rolle (20) besteht und an der Oberfläche des Rolladens aufliegt, wobei die Verschiebung dieser Rolle einen das Anhalten des Antriebsgetriebemotors auslösenden Mikroschalter (24) betätigt, wenn der Rolladen in seiner oberen Endposition ankommt.

6. Rolladen nach einem der vorhergehenden Ansprüche,
dadurch **gekennzeichnet,**
daß die Vorrichtung zur Steuerung der Lage und Bewegung des Rolladens auf einem schwenkbaren Halter (26) drehbar um eine Achse (28) montiert und mit einer Rückholfeder versehen ist, wobei die so gebildete Einheit so oben auf einer der seitlichen Führungsschienen des Rolladens befestigt ist, daß die Mittel (10) zur Erfassung der Verschiebebewegung des Rolladens ständig am Vorhang des Rolladens anliegen.

7. Rolladen nach einem der vorhergehenden Ansprüche,
dadurch **gekennzeichnet,**
daß der elektronische Schaltkreis zur Verarbeitung der durch den Aufnehmer (16) und den Aufnehmer zur Detektion des Vorhangs (20) gelieferten Informationen einen insbesondere monostabilen Schalter (30) aufweist, der die vom Lageaufnehmer (16) und vom Aufnehmer zur Detektion des Vorhangs (20) kommenden Signale verarbeitet, indem er sie mit Hilfe eines bistabilen Abschaltkreises umformt, und der ein logisches Alles-oder-Nichts-Signal des Ingangsetzens oder des Anhaltens des Rolladens erzeugt, wobei die Ausgangssignale zu einer Box zur Verarbeitung der Informationen über eine Drahtleitung oder eine verdrillte Doppelleitung (32) übertragen werden und zwei Zustände annehmen können:
- Strom in einer ersten Richtung: Rolladen in Bewegung;
- Strom in der entgegengesetzten Richtung: Anhaltebefehl durch den Mikroschalter (24), der vom Aufnehmer zur Detektion des Vorhangs (20) in der Endstellung gegeben wird.

8. Rolladen nach einem der vorhergehenden Ansprüche,
**gekennzeichnet** durch
zwei Vorrichtungen zur Steuerung der Lage und der Verschiebung des Vorhangs des Rolladens, wobei je eine dieser Vorrichtungen auf jeweils einer eine seitlichen Führungsschiene des Vorhangs montiert ist.

## Claims

1. Improved motorized roller shutter, of the type comprising an apron or curtain, a winding roller for this apron, a driving motor-reduction gear of the tubular type housed in said roller and an actuating device for this motor-reduction gear which contains a device for monitoring the position and the displacement of the roller shutter, coding means (12) driven by said monitoring means, a sensing system (16) for the information transmitted by said coding means and supplying displacement and position signals for said apron, and an electronic circuit (34) for processing said signals which acts upon the actuation of the driving motor-reduction gear for the shutter for immobilizing said shutter in any desired position or for supplying a signal such as, notably, an alarm signal, characterized in that the device for monitoring the position and the displacement of the roller shutter comprises means which assure the detection of the linear translatory movement of the apron of the roller shutter which are constituted of a friction wheel (10) coming into bearing on the surface of said apron and converting the linear displacement movement of the shutter into a rotary movement.

2. Roller shutter according to Claim 1, characterized in that the coding means are realized in the form of a coding wheel (12), provided with a certain number of peripheral, radial notches, which is integral with said friction wheel (10) and is driven by it.

3. Roller shutter according to any one of the preceding Claims, characterized in that the sensing system for the information supplied by said coding means (12) is realized in the form of an optoelectronic pick-up (16) which detects the passage of the notches of said coding wheel and which supplies a corresponding electrical signal, which is processed by said electronic circuit (34).

4. Roller shutter according to any one of the preceding Claims, characterized in that it comprises, in addition, a pick-up (22) of the presence of the apron of the shutter for the purpose of detecting the arrival of said apron in an upper position and causing stoppage of said driving motor-reduction gear.

5. Roller shutter according to Claim 4, characterized in that said pick-up of the presence of the apron is constituted of a wheel (20) mounted at the end of an arm (22) biased by a spring and bearing against the surface of said apron, the displacement of this wheel, when the apron arrives in its upper position, actuating a microswitch (24) which triggers the stopping of said driving motor-reduction gear.

6. Roller shutter according to any one of the preceding Claims, characterized in that the device for monitoring the position and the movement of the roller shutter is mounted on an oscillating support (26) articulated on an axis (28) and provided with a restoring spring, the thus formed assembly being fixed on one of the lateral guide rails for the apron of the shutter, at the top of this rail, in such a way that the means (10) assuring the detection of the translatory movement of the shutter are in permanent bearing against the apron of said shutter.

7. Roller shutter according to any one of the preceding Claims, characterized in that said electronic circuit for processing the information supplied by the sensor (16) and the pick-up for the presence of the apron (20) comprises, notably, a mono-stable circuit (30) which processes the signals coming from said position sensor (16) and said pick-up for the presence of the apron (20) and editing them by means of a bistable triggering circuit and which generates an on/off logic signal for movement or stopping of the shutter, the output signals being transmitted to a processing unit for the information by means of a signal line or twisted pair (32) capable of adopting two states:
   - current in a first direction: shutter in movement;
   - current in the opposite direction: stop instruction by the microswitch (24) actuated by the pick-up for presence of the apron (20) at the end of travel.

8. Roller shutter according to any one of the preceding Claims, characterized in that it comprises two monitoring devices for the position and the movement of the apron of the shutter, each of these devices being mounted, respectively, on one lateral guide rail for said apron.

FIG. 1

16

2

24

10

12

22

20

---

FIG. 4

12

16

30

AMPLIS
DE
SORTIE

LIAISON VERS
BOITIER DE
TRAITEMENT

32

1 PAIRE
TORSADEE
(INFOS
CAPTEURS)

20

MISE EN FORME

+V

ALIMENTATION

1 PAIRE
TORSADEE
(RACCORD
ALIMENTATION)

# FIG. 2

FIG. 3